# EUROPEAN PATENT SPECIFICATION

(11) **EP 2 115 227 B1**
(45) Date of publication and mention of the grant of the patent: **02.10.2013**
(21) Application number: 08708749.0
(22) Date of filing: 06.02.2008
(51) Int. Cl.: E03F 7/06, A01M 27/00, A01M 31/00

(54) **Powered equipment and a method of mounting such equipment in front of a sewer pipe**
Angetriebene Einrichtung und Verfahren zum Aufbau dieser Einrichtung vor einem Kanalrohr
Appareil motorisé et montage d'un tel appareil en face d'une canalisation d'égout.

(30) Priority: 26.02.2007 US 678687; 19.10.2007 WO PCT/DK2007/000449
(43) Date of publication of application: 11.11.2009
(73) Proprietor: Paf Holding APS, 3200 Helsinge (DK)
(72) Inventor: FRITZBØGER, Preben, DK-3200 Helsinge (DK)
(74) Representative: Zacco Denmark A/S
(86) International application number: PCT/EP2008/051458
(87) International publication number: WO 2008/104448

(56) References cited:
- EP-A- 1 400 172
- WO-A-2006/053562
- US-A- 5 581 934

## Description

The invention relates to installing powered equipment in front of a sewer pipe opening in a sewer shaft.

Such equipment can be used for many purposes such as monitoring and/or continuously recording the water level, flow rate, flow, water quality/pollution, PH value or temperature in the sewer pipes, or for exterminating rats. For instance, the trap may be equipped with one or more means for these tasks.

In this document a trap for exterminating rats is used as an example of such powered equipment.

From EP 1400172 is known a rat trap for exterminating rats in e.g. sewer pipes, and where powered equipment is arranged in the sewer pipe comprising means for sensing a rat, and means for killing the rat in the sewer pipe.

From WO 2006/053562 is known a device for preventing entry of a rodent through a pipe.

A problem with this kind of equipment is that the space required for the complete installation due to especially the power source such as a battery, a spring or compressed air requires that the equipment may only be installed in pipes having a relatively large cross section, or that at least a part the powered equipment must necessarily be installed outside the pipe and openings must be provided in the pipe in order for the powered equipment such as the means for killing rats to enter the pipe from the outside of the pipe.

According to the claim 1 this is obtained by a method of installing powered equipment comprising the steps of:
selecting a resilient cylindrical member comprising a console adapted for mounting the powered equipment to the resilient cylindrical member, and the resilient cylindrical member having, in its unstressed state, an outer radius which slightly exceeds the inner radius of the sewer pipe opening;
mounting the powered equipment on the console of the resilient cylindrical member;
positioning the resilient cylindrical member in front of the sewer pipe opening and compressing the resilient cylindrical member to have an outer radius being smaller than the inner radius of the sewer pipe opening;
inserting at least part of the resilient cylindrical member into the sewer pipe, so that the console with the powered equipment extends inside the sewer shaft;
releasing the compression of the resilient cylindrical member so that the resilient cylindrical member expands in order to engage with the inside of the sewer pipe opening.

By means of the resilient cylindrical member and its console for mounting the powered equipment it is hereby obtained that the sewer pipe is prolonged into the sewer shaft so that the sewer shaft provides space for the powered equipment, but still ensuring that rats move around as if they were still in the sewer pipe.

The invention also provides a powered equipment comprising a console for installing the powered equipment in front of a sewer pipe opening in a sewer shaft according to claim 3.

### List of figures.

Now the invention will be described in further detail with point of departure in the figures; wherein
Figure 1 schematically shows the construction of an embodiment of the console with a powered equipment in the form of a rat trap mounted thereon;
Figure 2 shows the rat trap according to fig. 1, mounted in a sewer shaft;
Figure 3 shows a console according to the invention for mounting in a sewer pipe including a mounting tool.
Figure 4 shows a second embodiment of console according to the invention for mounting in a sewer pipe including a mounting tool.

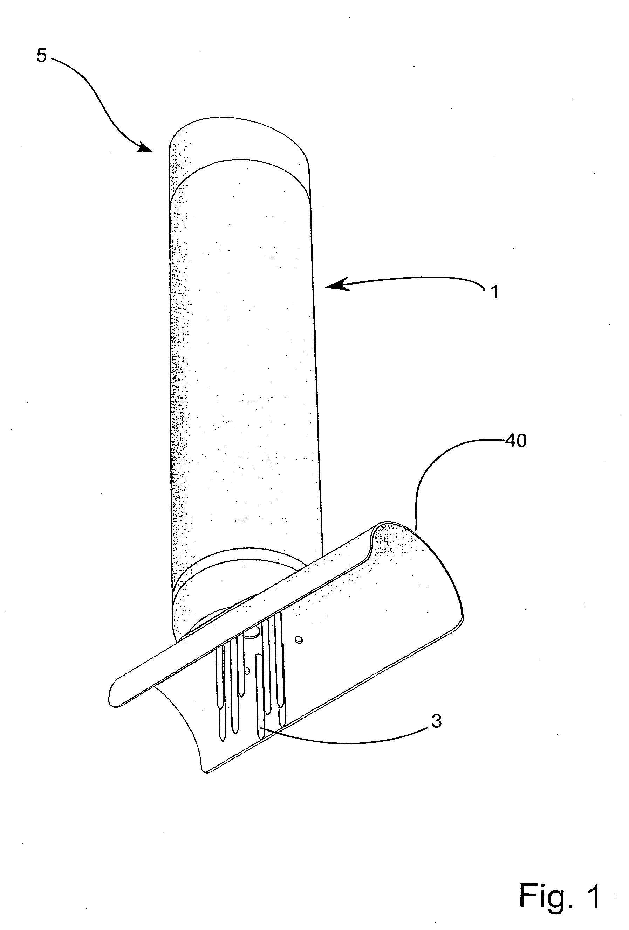

Reference being initially made to Figure 1, an embodiment of the invention will be explained in further detail. The rat trap 1 comprises a power source such as a battery, and an automatic mechanism (not shown) which is capable of both firing the spikes 3 and pulling them back in order to thereby release a spiked rat. This rat trap is only to be seen as an example of a powered equipment to be mounted in a sewer shaft in front of a sewer pipe opening. Installing powered equipment in sewer pipes has until now been difficult because of the space required for installing the powered equipment in the sewer pipe.

On the other hand the sewer shaft provides a lot of space for installing equipment, but installation of e.g. a rat trap in the sewer shaft has the disadvantage that the rats may be able to pass the rat trap without activating it.

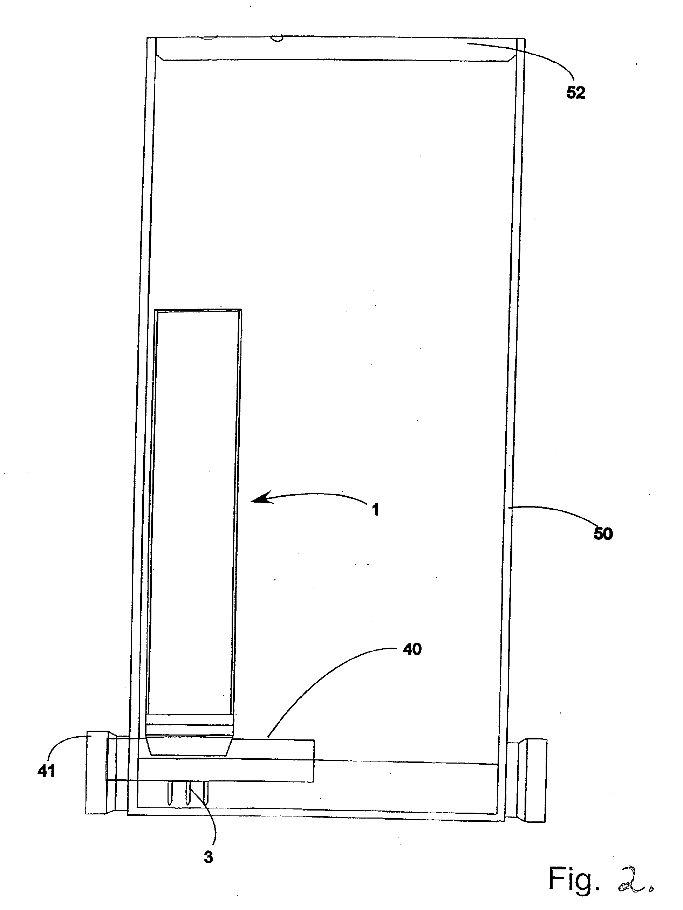

According to the invention figure 2 shows a trap 1 which is arranged at the bottom of a sewer shaft 50. The trap 1 is mounted on a console 40 which in the shown embodiment is a flexible semi-cylindrical tubular member 40 that resiliently engages a sewer pipe 41 but the mounting member could also be in form of e.g, semi-cylindrical tubular member being provided with expanding means such that it is capable of engaging the inner side of a pipe. The resilient member 40 may be made out of steel but other materials may be used such as e.g. plastic.

In its unstressed state, the resilient tubular member 40 has an outer radius which slightly exceeds the inner radius of the sewer pipe 41. Thereby the trap is easily fastened therein merely by a trap mounting tool compressing the tubular member 40 to such suitable extent that the tubular member 40 can be inserted into the sewer pipe 41. Then the mounting tool inserts the tubular member 40 into the sewer pipe 41 and lets go of it, following which the tubular member 40 resiliently engages the inside of the sewer pipe 41. Even though the member 40 is described as being made out of resilient material other solutions known to the skilled person may be used, such as e.g. mechanically expanding sleeves. For illustrative purposes, the trap is shown with the spikes out, but of course this is usually not the case unless the trap is to be serviced or the like.

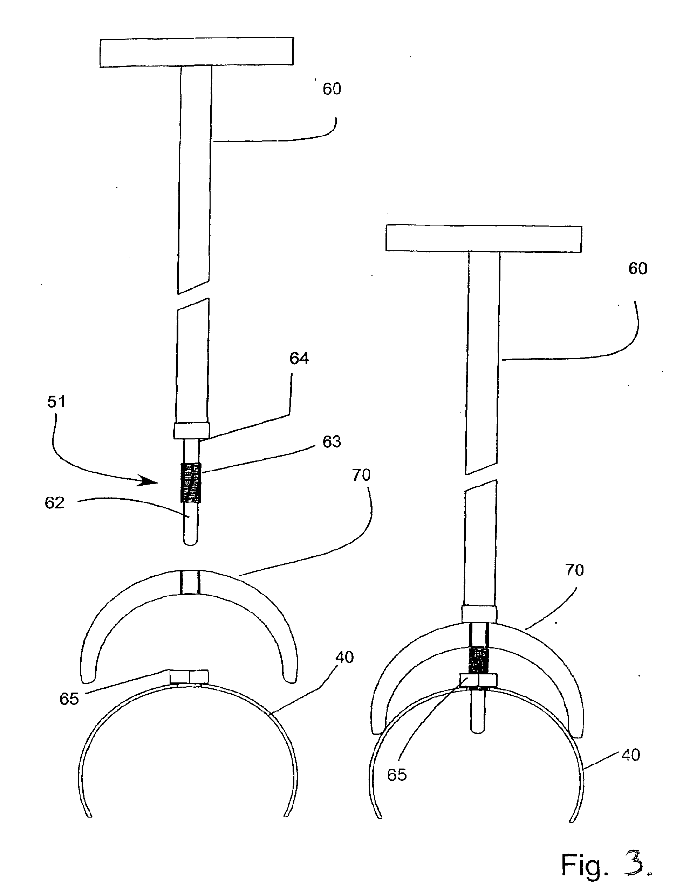

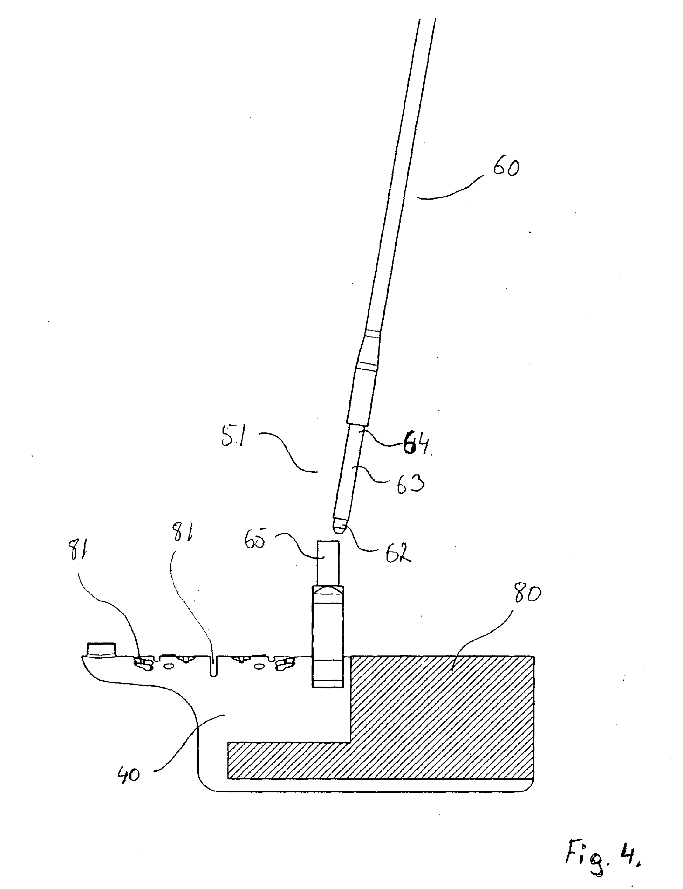

Figure 3 and 4 shows a console according to the invention comprising preferably a tool for mounting a trap in a sewer shaft and the functionality of it will be explained in further detail in the following. The tool consists of two parts: a handle part 60 and a jaw 70 having two fingers extending on each side of the console 40. Moreover, the figure also shows a resilient tubular member 40. As explained above, the trap or other powered equipment will usually be mounted on the console 40, but for the sake of clarity this is not the case in the depiction shown in Figure 3.

The handle part is provided with a mounting shaft 51, being in the shown - embodiment divided into three pieces 62, 63, 64, where only the middlemost part 63 is provided with thread. The mounting shaft is adapted to the jaw 70 in such a manner that the thread mates with corresponding thread in the jaw, and the thread-less part 64 of the mounting shaft which is situated after the thread 63 is adapted to the thickness of the jaw to the effect that the mounting shaft can be turned so far into the jaw 70 that the thread 63 on the mounting shaft 51 does not engage with the thread of the jaw. Like the jaw, the resilient tubular member 40 is provided with a thread mating with the thread on the mounting shaft 51. That thread can be constituted (as shown in the Figure) of a nut 65, but of course the thread can be made in a variety of other ways.

When the tool is to be used, one starts out by mounting the jaw 70 on the mounting shaft 51. Then one may turn the thread 63 of the mounting shaft into the nut on the tubular element 40 and thereby the tubular member 40 is pulled into the convex portion of the jaw 70. During this process the tubular member 40 is deformed (compressed). The mounting tool continues this deformation until the tubular member 40 can be pressed into the sewer pipe where the trap is to be mounted (not shown), following which the mounting tool deploys the trap simply by turning the mounting shaft out of engagement with the tubular member 40.

Even though the jaw 70 can be secured to the mounting pin in many ways, eg by means of a known split pin system (arranged on the top face of the thread portion 63 or a corresponding place) the embodiment as shown in Figure 3 is associated with the advantage that several sizes of jaws (different diameters/curvatures) can be mounted on the same mounting shaft 51.

Thereby the mounting tool needs only one handle part which can then be used for several different (different diameters/curvatures) jaws which he selects in response to the size of tubular element 40 (fitted with trap) to be mounted in a sewer.

In fig. 4 the console is shown from its outside on one side, and as can be seen the tubular part of the console is provided with a friction increasing material 80. The friction increasing material is preferably made from rubber in order to provide good friction between the tubular part of the console and the inside of the sewer pipe, but any friction increasing material can be selected for specific purposes. Furthermore a number of holes 81 are extending through the console from its outside to its inside is arranged for mount of the powered equipment such as the rat trap according to fig. 1 and 2, and for allowing e.g. the spikes 3 to enter into the inside of the console from its outside.

The trap may advantageously be equipped with means for monitoring tasks. For instance, the trap may be equipped with one or more means for tasks such as monitoring and continuously recording the water level, flow rate, flow, water quality/pollution, PH value or temperature.

## Claims

1. A method of mounting powered equipment (1) in front of a sewer pipe (41) opening in a sewer shaft (50), the method comprising the steps of
• Selecting a resilient tubular member (40) comprising a console (40) adapted for mounting the powered equipment to the resilient tubular member, and the resilient tubular member having, in its unstressed state, an outer radius which slightly exceeds the inner radius of the sewer pipe opening;
• Mounting the powered equipment on the console of the resilient tubular member;
• Positioning the resilient tubular member in front of the sewer pipe opening and compressing the resilient tubular member to have an outer radius being smaller than the inner radius of the sewer pipe opening:
• Inserting at least part of the resilient tubular member into the sewer pipe, so that the console with the powered equipment extends inside the sewer shaft;
• Releasing the compression of the resilient tubular member, so that the resilient cylindrical member expands to engage with the inside of the sewer pipe opening.

2. A method according to claim 1, **characterised in, that** the positioning of the resilient tubular member in front of the sewer pipe comprises the use of a mounting tool (60, 70) extending from above the sewer shaft for lowering of the resilient tubular member into the sewer shaft, with the powered equipment mounted thereon.

3. A powered equipment (1) comprising a console (40) for mounting the powered equipment in front of a sewer pipe (41) opening in a sewer shaft (50), the console having a first end comprising a tubular part (40) made from a resilient material, and where the tubular part has a longitudinal slit allowing the tubular part to be compressed to a smaller cross section, and a second end having means for mounting the powered equipment, charactereised in, that the powered equipment (1) is mounted on the outside of the console.

4. A powered equipment according to claim 3, **characterised in, that** the means for mounting powered equipment comprises a mounting plate having a number of holes (81) extending from the outside of the console to the inside.

5. A powered equipment according to claim 3, **characterised in, that** at least the tubular part (40) is made of resilient plastic.

6. A powered equipment according to claim 5, **characterised in, that** at least part of the outside of the tubular part is covered with a friction increasing material (80) such as rubber for increasing friction between the tubular part and the sewer pipe.

7. A powered equipment according any of claims 3 to 6, **characterised in, that** it comprises a tool (60, 70) for compressing the tubular part.

8. A powered equipment according to claim 7, **characterised in, that** the tool comprises a jaw (70) having at least two fingers spaced apart from each other with a distance being smaller than the outer radius of the tubular part, and means for pressing the fingers against the outside of the tubular part.

9. A powered equipment according to claim 8, chatacterised in, that the means for pressing the fingers against the outside of the tubular part (40) comprises a shaft (51) having an outer thread (63) and a flange (64) at the end of the outer thread, and a hole in the tubular part (40) having an inner thread for receiving the outer thread of the shaft, and where the jaw has a hole between the fingers for receiving the threaded end of the shaft and for engaging with the flange (64) on the shaft (51), so that when the shaft is rotated it is screwed into the tubular part, and the flange (64) on the shaft presses the fingers on the jaw to compress the tubular part.

10. A powered equipment according to claim 7, 8 or 9, **characterised in, that** the shaft (51) is telescopic or made from two or more shaft sections that can be assembled to each other.

## Patentansprüche

1. Verfahren zum Montieren einer angetriebenen Einrichtung (1) vor einer Öffnung eines Kanalrohrs (41) in einem Abwasserschaft (50), wobei das Verfahren die folgenden Schritte umfasst
• Auswählen eines elastischen rohrförmigen Elements (40), umfassend eine Konsole (40), die dazu angepasst ist, die angetriebene Einrichtung am elastischen rohrförmigen Element zu montieren, und wobei das elastische rohrförmige Element in seinem entspannten Zustand einen äußeren Radius aufweist, der den inneren Radius der Kanalrohröffnung leicht übersteigt;
• Montieren der angetriebenen Einrichtung auf der Konsole des elastischen rohrförmigen Elements;
• Anbringen des elastischen rohrförmigen Elements vor der Kanalrohröffnung und das Zusammendrücken des elastischen rohrförmigen Elements, damit es einen äußeren Radius bekommt, welcher kleiner als der innere Radius der Kanalrohröffnung ist;
• Einsetzen zumindest eines Teils des elastischen rohrförmigen Elements in den Kanalrohr, damit sich die Konsole mit der angetriebenen Einrichtung im Inneren des Abwasserschafts erstreckt;
• Entlasten des Zusammendrückens des elastischen rohrförmigen Elements, damit das elastische zylindrische Element aufweitet, um mit der Innenseite der Kanalrohröffnung in Eingriff zu gehen.

2. Verfahren nach Anspruch 1, **dadurch gekennzeichnet, dass** das Anbringen des elastischen rohrförmigen Elements vor dem Kanalrohr die Verwendung eines Montagewerkzeugs (60, 70) umfasst, das sich von oberhalb des Abwasserschafts zum Absenken des elastischen rohrförmigen Elements in den Abwasserschaft erstreckt, wobei die angetriebene Einrichtung darauf montiert ist.

3. Angetriebene Einrichtung (1), umfassend eine Konsole (40) zum Montieren der angetriebenen Einrichtung vor einer Öffnung eines Kanalrohrs (41) in einem Abwasserschaft (50), wobei die Konsole ein erstes Ende, umfassend einen aus einem elastischen Material hergestellten rohrförmigen Teil (40), und wobei der rohrförmige Teil einen Längsschlitz aufweist, welcher das Zusammendrücken des rohrförmigen Teils zu einem kleineren Querschnitt ermöglicht, und ein zweites Ende aufweist, das Mittel zum Montieren der angetriebenen Einrichtung besitzt, **dadurch gekennzeichnet, dass** die angetriebene Einrichtung (1) auf der Außenseite der Konsole montiert ist.

4. Angetriebene Einrichtung nach Anspruch 3,
**dadurch gekennzeichnet, dass** das Mittel zum Montieren der angetriebenen Einrichtung eine Montageplatte mit einer Anzahl von sich von der Außenseite der Konsole zur Innenseite erstreckenden Löchern (81) umfasst.

5. Angetriebene Einrichtung nach Anspruch 3,
**dadurch gekennzeichnet, dass** zumindest der rohrförmige Teil (40) aus einem elastischen Kunststoff hergestellt ist.

6. Angetriebene Einrichtung nach Anspruch 5,
**dadurch gekennzeichnet, dass** zumindest ein Teil der Außenseite des rohrförmigen Teils mit einem reibungserhöhenden Material (80) wie etwa Gummi zur Reibungserhöhung zwischen dem rohrförmigen Teil und dem Kanalrohr gedeckt ist.

7. Angetriebene Einrichtung nach irgendeinem der Ansprüche 3 bis 6,
**dadurch gekennzeichnet, dass** sie ein Werkzeug zum Zusammendrücken des rohrförmigen Teils (60, 70) umfasst.

8. Angetriebene Einrichtung nach Anspruch 7,
**dadurch gekennzeichnet, dass** das Werkzeug eine Klaue (70) mit mindestens zwei voneinander beabstandeten Fingern in einem Abstand, der kleiner als der äußere Radius des rohrförmigen Teils ist, und ein Mittel zum Drücken der Finger gegen die Außenseite des rohrförmigen Teils umfasst.

9. Angetriebene Einrichtung nach Anspruch 8,
**dadurch gekennzeichnet, dass** das Mittel zum Drücken der Finger gegen die Außenseite des rohrförmigen Teils (40) einen Schaft (51) mit einem Außengewinde (63) und einem Flansch (64) am Ende des Außengewindes und ein Loch im rohrförmigen Teil (40) mit einem Innengewinde zur Aufnahme des Außengewindes des Schafts umfasst, und wobei die Klaue ein Loch zwischen den Fingern zur Aufnahme des Gewindeendes des Schafts und zum Eingriff mit dem Flansch (64) auf dem Schaft (51) aufweist, so dass der Schaft bei dessen Drehung in den rohrförmigen Teil hineingeschraubt wird, und der Flansch (64) auf dem Schaft die Finger auf der Klaue drückt, um den rohrförmigen Teil zusammenzudrücken.

10. Angetriebene Einrichtung nach Anspruch 7, 8 oder 9,
**dadurch gekennzeichnet, dass** der Schaft (51) teleskopisch oder aus zwei oder mehreren miteinander zusammenbaubaren Schaftabschnitten hergestellt ist.

## Revendications

1. Procédé de montage d'un équipement alimenté (1) en face d'une ouverture d'un conduit d'égout (41) dans un puits d'égout (50), ledit procédé comprenant les étapes de
• sélectionner un élément tubulaire élastique (40) comportant une console (40) adaptée pour le montage de l'équipement alimenté à l'élément tubulaire élastique, et l'élément tubulaire élastique présentant, dans son état non contraint, un rayon extérieur qui est légèrement supérieur au rayon intérieur de l'ouverture du conduit d'égout;
• monter l'équipement alimenté sur la console de l'élément tubulaire élastique;
• positionner l'élément tubulaire élastique en face de l'ouverture du conduit d'égout et comprimer l'élément tubulaire élastique pour avoir un rayon extérieur étant inférieur au rayon intérieur de l'ouverture du conduit d'égout;
• insérer au moins une portion de l'élément tubulaire élastique dans le conduit d'égout, si bien que la console avec l'équipement alimenté s'étend à l'intérieur du puits d'égout;
• relâcher la compression de l'élément tubulaire élastique, si bien que l'élément cylindrique élastique se dilate pour venir en prise avec le côté intérieur de l'ouverture du conduit d'égout.

2. Procédé selon la revendication 1, **caractérisé en, ce que** le positionnement de l'élément tubulaire élastique en face du conduit d'égout comprend l'utilisation d'un outil de montage (60, 70) s'étendant à partir d'au-dessus du puits d'égout pour l'abaissement de l'élément tubulaire élastique dans le puits d'égout, avec l'équipement alimenté y monté.

3. Equipement alimenté (1) comprenant une console (40) pour le montage de l'équipement alimenté en face d'une ouverture d'un conduit d'égout (41) dans un puits d'égout (50), la console présentant une première extrémité comportant une partie tubulaire (40) faite d'un matériau élastique, et la partie tubulaire présentant une fente longitudinale permettant à la partie tubulaire d'être comprimée à une section transversale inférieure, et une deuxième extrémité ayant des moyens pour le montage de l'équipement alimenté, **caractérisé en, ce que** l'équipement alimenté (1) est monté sur le côté extérieur de la console.

4. Equipement alimenté selon la revendication 3, **caractérisé en, ce que** le moyen pour monter l'équipement alimenté comprend une plaque de montage ayant un certain nombre de trous (81) s'étendant du côté extérieur de la console vers le côté intérieur.

5. Equipement alimenté selon la revendication 3, **caractérisé en, ce qu'**au moins la partie tubulaire (40) est faite de matière plastique élastique.

6. Equipement alimenté selon la revendication 5, **caractérisé en, ce qu'**au moins une portion du côté extérieur de la partie tubulaire est recouverte d'un matériau augmentant la friction (80) tel que du caoutchouc pour augmenter la friction entre la partie tubulaire et le conduit d'égout.

7. Equipement alimenté selon l'une quelconque des revendications 3 à 6, **caractérisé en, ce qu'**il comprend un outil (60, 70) pour la compression de la partie tubulaire.

8. Equipement alimenté selon la revendication 7, **caractérisé en, ce que** l'outil comporte une mâchoire (70) ayant au moins deux doigts espacés l'un de l'autre par une distance étant inférieure au rayon extérieur de la partie tubulaire, et des moyens pour presser les doigts contre le côte extérieur de la partie tubulaire.

9. Equipement alimenté selon la revendication 8, **caractérisé en, ce que** le moyen pour presser les doigts contre le côté extérieur de la partie tubulaire (40) comprend un arbre (51) ayant un filetage extérieur (63) et une bride (64) à l'extrémité du filetage extérieur, et un trou dans la partie tubulaire (40) ayant un filetage intérieur destiné à recevoir le filetage extérieur de l'arbre, et la mâchoire présentant un trou entre les doigts pour recevoir l'extrémité filetée de l'arbre et pour venir en prise avec la bride (64) sur l'arbre (51), si bien que lorsque l'arbre est mis en rotation il est vissé dans la partie tubulaire, et la bride (64) sur l'arbre presse les doigts sur la mâchoire pour compresser la partie tubulaire.

10. Equipement alimenté selon la revendication 7, 8 ou 9, **caractérisé en, ce que** l'arbre (51) est télescopique ou fabriqué à partir de deux ou plusieurs sections d'arbre qui peuvent être assemblées les unes aux autres.
